Europäisches Patentamt

European Patent Office

Office européen des brevets

(19)

(11) Numéro de publication: **0 464 899 A1**

# DEMANDE DE BREVET EUROPEEN

(21) Numéro de dépôt: **91201561.7**

(22) Date de dépôt: **19.06.91**

(51) Int. Cl.5: **G06F 7/44**, G06F 7/52,
G06F 7/544

(30) Priorité: **29.06.90 FR 9008223**

(43) Date de publication de la demande:
**08.01.92 Bulletin 92/02**

(84) Etats contractants désignés:
**DE FR GB IT**

(71) Demandeur: **N.V. Philips' Gloeilampenfabrieken**
**Groenewoudseweg 1**
**NL-5621 BA Eindhoven(NL)**

(72) Inventeur: **van Dongen-Vogels, Vincent,**

**Société Civile S.P.I.D**
**156, Boulevard Haussmann**
**F-75008 Paris(FR)**
Inventeur: **Ouisquater, Jean-Jacques, Société Civile S.P.I.D.**
**156, Boulevard Haussmann**
**F-75008 Paris(FR)**

(74) Mandataire: **Pinchon, Pierre et al**
**Société Civile S.P.I.D. 156, Boulevard Haussmann**
**F-75008 Paris(FR)**

(54) **Circuit multiplicateur et système pour sa mise en oeuvre.**

(57) Circuit multiplicateur constitué de plusieurs rangs d'addition binaire (carry save adder) caractérisé en ce que le dernier rang est rebouclé sur le premier au moyen de lignes de connexions munies d'un registre de retard.

Un tel circuit convient notamment pour multiplier A par B, B étant un nombre de grande dimension lequel est fourni sous forme multiplexée, la multiplication s'effectue alors pas à pas.

En ajoutant un additionneur (ripple carry adder) le circuit effectue, toujours pas à pas, l'opération $A \times B + Y = R$ d'où l'utilisation du circuit dans un système de calcul d'un algorithme tel que RSA.

FIG. 2

La présente invention a pour objet un circuit multiplicateur pour multiplier un premier nombre A de 'm' bits $a_i$' ($0 \leqslant i \leqslant m-1$) par un deuxième nombre B de 'n' bits $b_j$' ($0 \leqslant j \leqslant n-1$), constitué d'une pluralité de rangs d'addition binaire ( = carry save adder) connectés entre eux, chaque rang d'addition binaire étant constitué de 'm' cellules de calcul, chaque cellule de calcul comportant un additionneur avec report propagé ( = one bit full adder) et une porte ET adéquatement connectés aux quatre connexions d'entrée $a_i$, $b_j$, Sin, Cin et aux deux connexions de sortie Sout, Cout (S pour résultat et C pour report) de la dite cellule de calcul.

Un tel circuit est bien connu dans l'industrie de l'électronique où il est généralement connecté à un système de pilotage pour sa mise en oeuvre laquelle nécessite au moins des données et une horloge.

La multiplication A.B peut être associée à une addition soit A.B + Y, dans ce cas le circuit est notamment utilisable pour l'encryptage et le décryptage des messages d'un système cryptographique tel que RSA.

Un circuit multiplicateur connu est présenté dans le livre "The design and analysis of VISI circuits" de Lance A. Glasser et Daniel W. Dobberpuhl publié par 'Addison-Wesley' à Reading, Massachusetts. Un réseau multiplicateur simple est décrit pages 52 et 53, puis un circuit plus complexe est décrit pages 54 et 55 mais la rapidité et la capacité de ce type de circuit sont assez limitées pour les raisons exposées par les auteurs eux-mêmes.

La présente invention a pour but de permettre la réalisation effective et économique d'un tel circuit sans aucun inconvénient tant au niveau de la rapidité que de la capacité.

Selon la présente invention un tel circuit multiplicateur est particulièrement remarquable en ce que les dites connexions de sorties de report $Cout_i$ du dernier des dits rangs d'addition binaire sont rebouclées, chacune au moyen d'une connexion de rebouclage, sur les dites connexions d'entrée de report $Cin_i$ du premier des dits rangs d'addition binaire, en ce que, les dites connexions de sorties de résultat $Sout_i$ du dernier des dits rangs d'addition binaire -à l'exception de la sortie de la cellule de calcul de poids faible (i = 0)- sont rebouclées, chacune au moyen d'une connexion de rebouclage, sur les dites connexions d'entrée de résultat $Sin_{i-1}$ du premier des dits rangs d'addition binaire, chaque dite connexion de rebouclage comportant un registre de retard, en ce que, le nombre M des dits rangs d'addition binaire est notablement inférieur à 'n', et en ce que, il est muni de moyens d'initialisation et de terminaison de telle sorte que, lorsque le nombre A est présent sur les dites connexions d'entrée $a_i$' alors que le nombre 'B' est présenté sur les dites connexions d'entrée $b_j$' sous forme multiplexée dans le temps, le résultat de la dite multiplication est obtenu sous forme multiplexée dans le temps sur les N connexions de sortie de résultat Sout des seules cellules de calcul de poids faible (i = 0) de chacun des N rangs.

Ainsi à chaque coup d'horloge, le nombre A de 'm' bits est multiplié par M bits du nombre B, en commençant par les bits de poids faible, et fournit N bits du produit A.B. On sait que le produit d'un nombre de 'm' bits (A) par un nombre de 'n' bits (B) comporte lui-même 'm + n' bits au maximum, de ce fait il résulte que la multiplication sera certainement achevée après

$$\frac{m+n}{N}$$

coups d'horloge.

Un tel circuit est remarquable par sa simplicité et sa régularité qui permettent à sa réalisation d'être très économique.

De plus la présentation du nombre A et la récupération du produit A.B sous forme multiplexée, ou séquentialisée, ne présente aucune difficulté technique. La multiplication s'effectue donc selon un processus régulier, facile à piloter, et dont la séquentialisation utilise itérativement un même circuit rebouclé sur lui-même. Ce processus convient particulièrement bien au cas où un des nombres, ici A, a une dimension 'm' relativement petite par rapport à celle 'n' de l'autre nombre, ici B.

Dans un mode préféré de réalisation un tel circuit multiplicateur est remarquable en ce que les dits moyens d'initialisation sont constitués d'une part de premiers moyens pour positionner à '0' les connexions d'entrée de résultat Sin des cellules de calcul de poids fort (i = m-1) de chaque rang d'addition binaire, d'autre part, de deuxièmes moyens pour positionner à '0' toutes les dites connexions de rebouclage quelle que soit la valeur enregistrée dans le registre de retard, les dits deuxièmes moyens étant activés uniquement lors de l'initialisation du calcul.

L'activation lors de l'initialisation du calcul est provoquée par un ordre RESET lequel a classiquement pour objet de mettre en position initiale adéquate les divers éléments du circuit.

La mise en oeuvre du principe de la séquentialisation du calcul peut encore être mieux exploitée dans une réalisation préférentielle particulièrement remarquable en ce que le circuit comporte en outre un additionneur ( = ripple carry adder) constitué d'une colonne de 'z' additionneurs avec report propagé ( = one bit full adder) connecté pour additionner bit à bit un troisième nombre Y de 'p' bits $y_k$' ($0 \leqslant k \leqslant p-1$) avec le dit résultat de la dite multiplication, le dit nombre Y étant présenté sous forme multiplexée dans le temps, et la connexion de sortie de report Cout du 'z'ième additionneur de la colonne étant rebouclée sur la connexion d'entrée de report du premier additionneur de la colonne laquelle connexion est similaire aux précédentes dites connexions de rebouclage.

Ainsi le circuit réalise l'opération A.B + Y avec des moyens éminemment économiques. Pour l'implémentation, le nombre 'z' est de préférence ⩾ N, mais le nombre 'p' peut être quelconque par rapport à 'm' et 'n' sous réserve de donner le nombre de coups d'horloge nécessaires au cas où 'p' serait très grand.

Préférentiellement, le nombre 'z' est égal à 'N' et le nombre 'p' est égal à 'n'. Ainsi le circuit reste de réalisation simple et régulière, et le nombre de coups d'horloge est inchangé puisque on sait que dans ce cas le résultat est encore constitué au maximum de 'm + n' bits. Après n/N coups d'horloge les nombres B et Y ont été totalement fournis au circuit et il est alors avantageux que les dits moyens de terminaison du calcul soient constitués de moyens pour positionner à '0' les entrées 'b$_j$' et 'y$_k$' pendant les coups d'horloge restants.

Une amélioration du circuit est remarquable en ce que chacune des N connexions de sortie de résultat Sout du multiplicateur vers l'additionneur est muni d'un registre de retard de telle sorte que, la présentation des bits 'Y$_k$' étant également retardée, l'exécution de l'addition s'effectue en retard sur l'exécution de la multiplication.

Ce dispositif permet, non pas de ralentir le calcul, mais de présenter successivement au circuit le nombre B puis le nombre Y ce qui est souvent un avantage du point de vue du transfert des données.

Le circuit multiplicateur est particulièrement simple à réaliser lorsque 'n' est un multiple exact de 'N'. Lorsque ce n'est pas le cas il convient de le munir de moyens pour, sélectivement, court-circuiter les circuits de calcul auxquels aucun bit de donnée d'entrée des nombres B et/ou Y n'est présenté. Par exemple si 'N' est égal à 3 et que 'n' est égal à 8, le nombre B (ainsi que le nombre Y) sera fourni en 3 coups d'horloge, le premier avec les bits 0, 1 et 2, le deuxième avec les bits 3, 4 et 5 et le troisième avec les bits 6 et 7. Lors du troisième coup d'horloge, le troisième (et dernier puisque M = 3) rang d'addition binaire doit être court-circuité de telle sorte que ce soit le deuxième rang (i.e. l'avant dernier) d'addition binaire qui est rebouclé sur le premier.

Un tel agencement permet un déroulement remarquable du processus de calcul, en effet un circuit préférentiel est remarquable en ce que il comporte 3 rangs d'addition binaire (M = 3), il comporte en outre un premier registre de mémoire pour mémoriser le nombre A, lequel est une constante, un deuxième registre de mémoire de 8 bits pour mémoriser, par tranches successives de 8 bits, le nombre B, un troisième registre de mémoire de 8 bits pour mémoriser, par tranches successives de 8 bits, le nombre Y, un quatrième registre de mémoire de 8 bits pour mémoriser, par tranches successives de 8 bits, le résultat R, et des moyens de multiplexage pour présenter, et des moyens de démultiplexage pour recueillir, respectivement et successivement 3 bits, puis encore 3 bits, et enfin 2 bits (3 + 3 + 2 = 8) transitant entre les dits 2ième, 3ième et 4ième registre et les connexions correspondantes du dit circuit.

Le processus de calcul est alors combiné avec la fourniture des données sur la base d'un cycle itératif d'une durée de 3 coups d'horloge à savoir :

- 1 coup pour fournir 8 bits de B
- 1 coup pour fournir 8 bits de Y
- 1 coup pour recueillir 8 bits de R

en synchronisation décalée, le circuit utilise aussi 3 coups pour le calcul de AB et de R à partir des bits 0, 1, 2, puis 3, 4, 5 et enfin 6, 7 de B et de Y, les 8 bits de R étant obtenus dans l'ordre 0, 1, 2 puis 3, 4, 5 et enfin 6, 7 de telle sorte qu'il n'y a pas de temps mort dans le cycle opératoire.

Un tel circuit multiplicateur est clairement destiné au traitement de nombre de grande dimension et un mode préférentiel de réalisation pour calculer R = A.B + Y est particulièrement remarquable en ce que A comporte 32 bits (m = 32), B et Y comportent 512 bits (p = n = 512), R comporte 544 bits (p + m = 544) le dit circuit étant connecté à un bus de données de 8 bits pour transporter les données A, B, Y et R, le processus complet de calcul comporte :

- une phase initiale qui dure 4 coups d'horloge pour enregistrer le nombre A (8x4 = 32)
- une phase opératoire qui dure 192 coups d'horloge soit 3 fois 512 divisé par 8 pour présenter B et Y et recueillir les 504 premiers bits de R,
- une phase terminale qui dure 15 coups d'horloge pour recueillir les 40 derniers bits de R c'est-à-dire un total de (4 + 192 + 15) = 211 coups d'horloge pour le calcul complet.

Un tel circuit est particulièrement adapté pour être inséré dans un système de calcul destiné à le mettre en oeuvre, notamment un système de calcul de l'algorithme de cryptographie connu sous le nom de RSA.

La présente invention sera bien comprise au vu de la description non limitative d'exemples de réalisation illustrés par des dessins.

La figure 1 représente une cellule de calcul connue.

La figure 2 représente un circuit de calcul A.B + Y conforme à l'invention.

La figure 3 représente le circuit de la figure 2 inséré dans son environnement.

La figure 4 représente un mode d'implémentation du module CTR de la figure 3.

Les figures 5, 6, 7, 8 représentent des modes de réalisation simplifiés de l'invention.

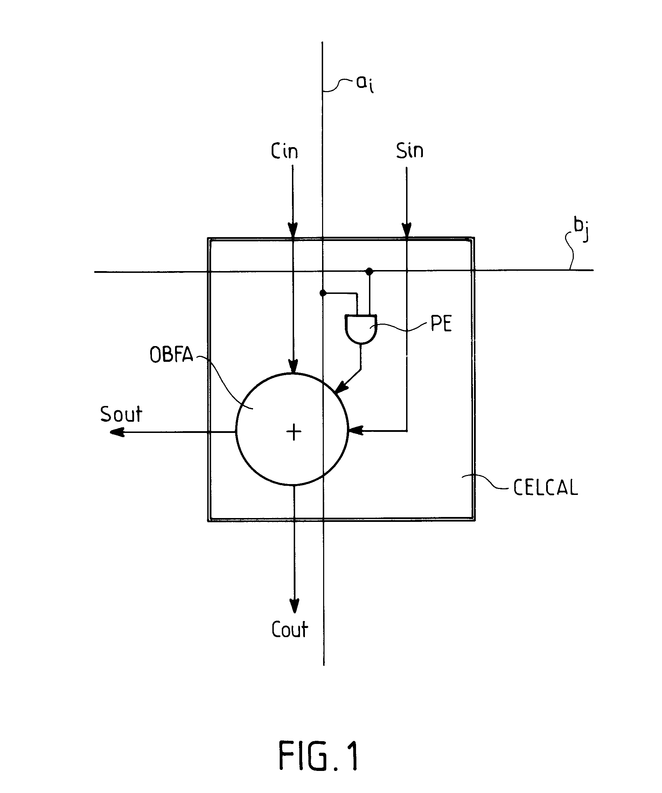

La figure 1 représente une cellule de calcul (CELCAL) comportant un additionneur avec report propagé (OBFA), en anglais : one bit full adder, et une porte ET (PE) connectés de manière connue de par le document cité à la page 53 avec les 6 entrées-sorties de la cellule à savoir :

- $a_i$ et $b_j$ : connexions d'entrée de un bit respectivement du nombre A et du nombre B
- Cin : connexion d'entrée de report (Carry in)
- Sin : connexion d'entrée de résultat (Sum in)
- Cout : connexion de sortie de report (Carry out)
- Sout : connexion de sortie de résultat (Sum out).

Il est de même connu de réaliser un circuit multiplicateur en connectant d'une part une rangée de cellules de calcul (CELCAL) entre elles selon le mode appelé "carry save adder" pour constituer un rang d'addition binaire, d'autre part en connectant entre eux plusieurs rangs d'addition binaire superposés comme indiqué dans la figure 1.76 page 55 du document cité.

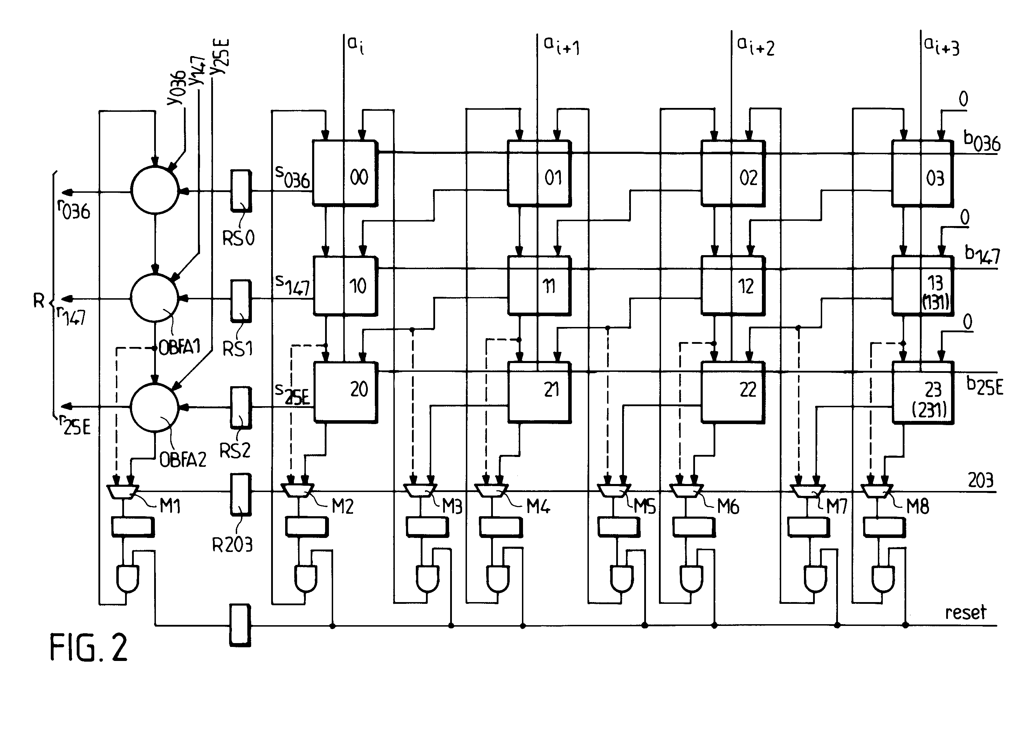

La figure 2, dans sa partie droite, représente un circuit multiplicateur selon l'invention.

Il comporte un premier rang d'addition binaire constitué des cellules de calcul 00, 01, 02, 03, un deuxième rang d'addition binaire constitué des cellules de calcul 10, 11, 12, 13 et un troisième rang de cellules de calcul 20, 21, 22, 23; toutes ces cellules de calcul sont identiques entre elles et à celle de la figure 1, de plus les 6 connexions d'entrées-sorties sont respectivement à la même place; chaque rang comporte ici, à titre d'exemple, 4 cellules (m = 4) mais ceci n'est pas limitatif puisque le schéma est clairement répétitif, il en est de même pour le nombre de rangs avec ici N = 3.

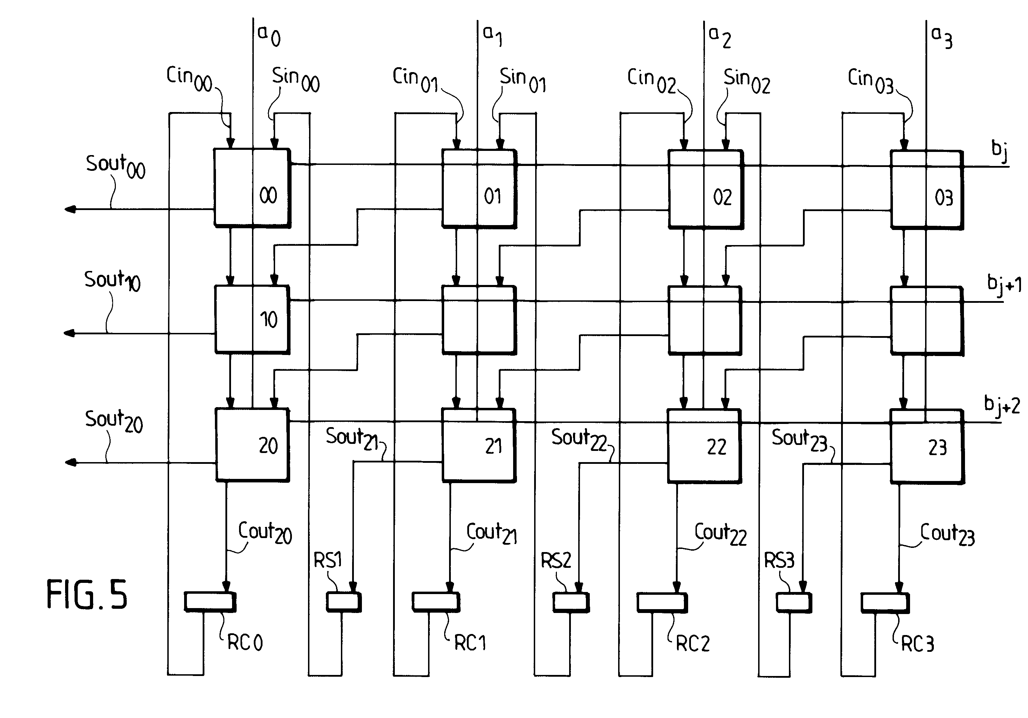

La partie droite de la figure 2 est représentée, plus simplement, sur la figure 5 laquelle comporte les éléments caractéristiques de la revendication 1 à savoir :

- les connexions de sortie de report du dernier rang (Cout 20, Cout 21, Cout 22, Cout 23) sont respectivement rebouclées sur les connexions d'entrée de report du premier rang (Cin 00, Cin 01, Cin 02, Cin 03) à travers un registre de retard (RC0, RC1, RC2, RC3),
- les connexions de sortie de résultat Sout du dernier rang (Sout 21, Sout 22, Sout 23) -à l'exception de la sortie de la cellule de poids faible (Sout 20)- sont respectivement rebouclées sur les connexions d'entrée de résultat (Sin 00, Sin 01, Sin 02) à travers un registre de retard (RS1, RS2, RS3).

Avec un tel circuit on peut multiplier un nombre A de 4 bits (m = 4) avec un nombre B de dimension (n) quelconque pour obtenir un résultat de dimension (m + n) présent sur les 3 sorties Sout 00, Sout 10, Sout 20. Pour ce faire, il suffit de présenter le nombre B par paquet de 3 bits successifs sur les lignes $b_j$, $b_{j+1}$, $b_{j+2}$ pour obtenir successivement par paquet de 3 bits le résultat recherché. A chaque coup d'horloge, 3 bits de B sont traités et 3 bits de résultat sont obtenus, en conséquence le calcul complet nécessite

$$\frac{m+n}{3}$$

coups d'horloge, les entrées b sont évidemment garnies avec des '0' lors des derniers pas du calcul, quand tous les bits de B ont été fournis, et que le circuit termine le traitement des divers reports, notamment ceux qui passent par les connexions de rebouclage avec registre de retard.

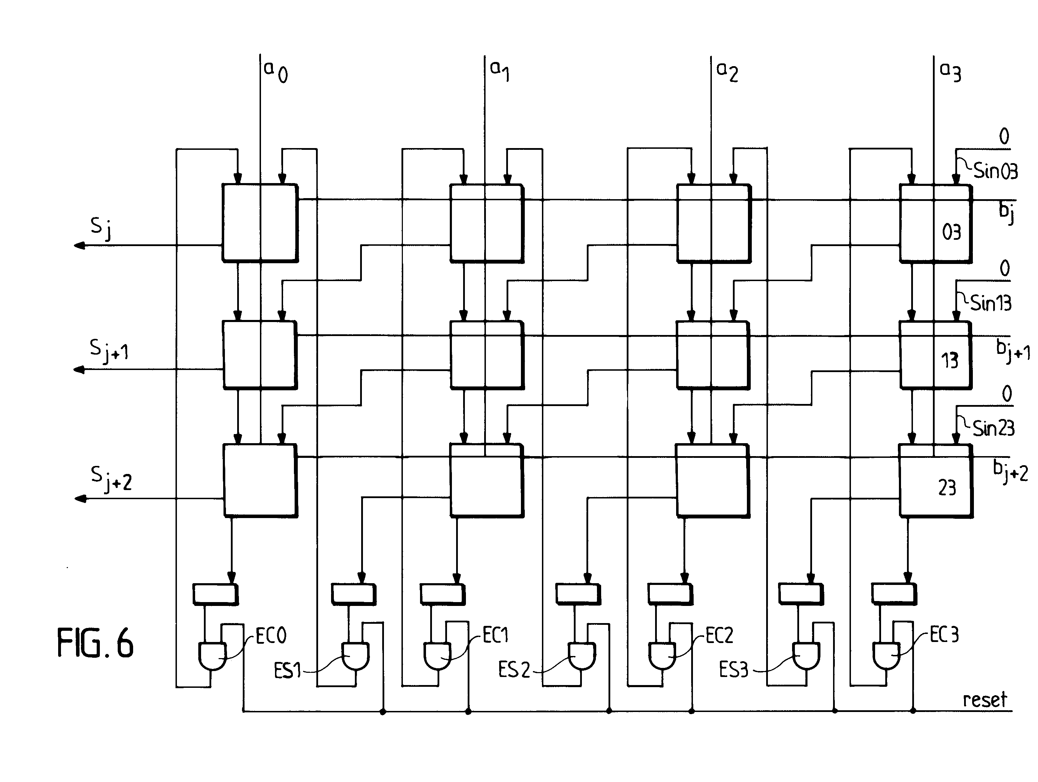

Dans la pratique réelle, il faut bien sûr s'assurer des conditions initiales du circuit avec des moyens d'initialisation. Ces moyens sont représentés sur la figure 6 laquelle est à nouveau une représentation partielle de la figure 2. Les cellules de calcul 03, 13, 23 sont en permanence alimentées avec un '0' sur leurs connexions d'entrée de résultat Sin 03, Sin 13, Sin 23. De plus toutes les connexions de rebouclage comportent, en série derrière le registre de retard, une porte ET à deux entrées (EC0, EC1, EC2, EC3 et ES1, ES2, ES3) dont la deuxième entrée est connectée à un ordre d'initialisation (RESET) lequel est positionné à '0' uniquement lors du premier coup d'horloge du calcul. Ainsi les conditions initiales sont satisfaites, mais d'autres moyens de réalisation sont envisageables pour parvenir au même but.

Il est clair que le principe de fonctionnement d'un tel circuit ne dépend ni de la dimension du nombre A, ni de la dimension du nombre B, de même, le nombre de rangs (N) d'addition binaire est indifférent ce qui revient à dire que les nombres m, n et N peuvent être choisis librement en fonction d'autres critères; le circuit multiplicateur est clairement un réseau parfaitement régulier et répétitif dans toutes les directions et, de ce fait, il est facilement et économiquement réalisable selon la technique des circuits intégrés, notamment la technique dite VLSI-CMOS.

Dans ce cas la seule limitation envisageable pourrait venir de la longueur des lignes $a_i$, $b_j$ ou encore de la longueur des connexions de rebouclage avec des problèmes de capacité parasite; le circuit est donc particulièrement adapté pour un nombre B de dimension quelconque et un nombre A de dimension non excessive de telle sorte que la longueur de chaque rang d'addition binaire ne soit pas démesurée par rapport aux possibilités technologiques.

Dans certains cas d'application, il est utile que le circuit multiplicateur effectue aussi une addition avec un nombre Y comportant 'p' bits $y_k$ ($0 \leqslant k \leqslant p-1$) soit à calculer $R = A.B + Y$.

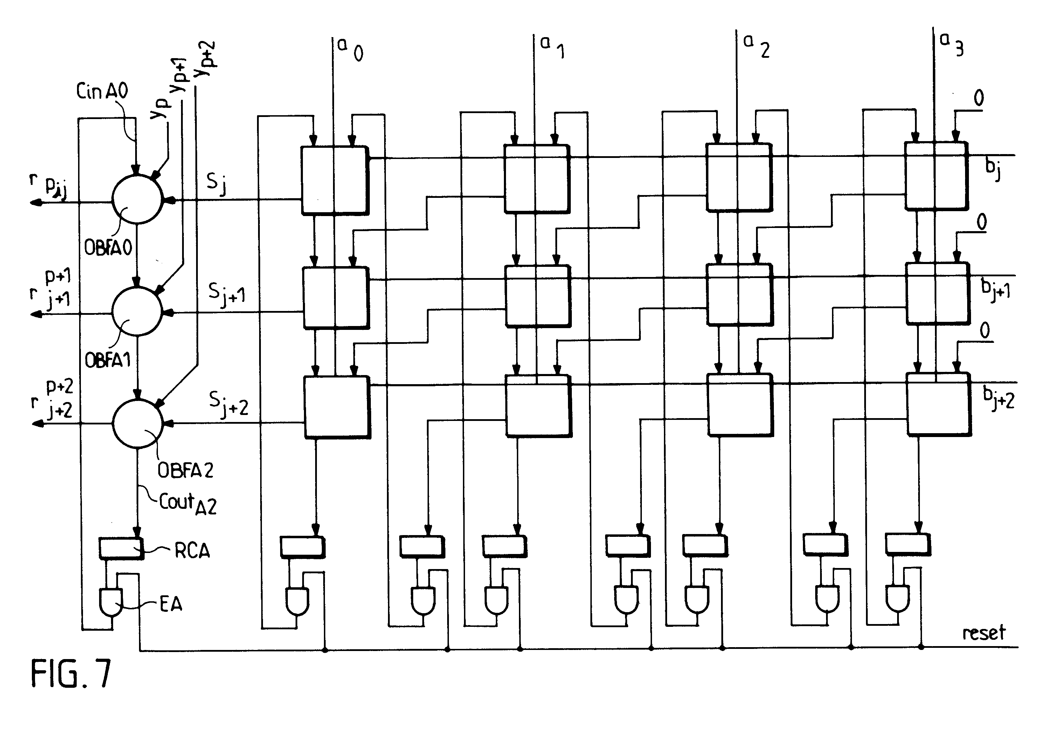

Le circuit de la figure 7, lequel est à nouveau une vue partielle de la figure 2, est conçu pour effectuer un tel calcul en utilisant la même présentation multiplexée des bits $y_k$ du nombre Y lesquels sont additionnés au résultat de la multiplication A.B au moyen de 'z' additionneurs avec report propagé (= one bit full adder) OBFA0, 0BFA1, 0BFA2, lesquels sont au nombre de '3' (z = 3) sur la figure 7, mais ceci n'est pas une obligation bien que l'égalité z = N soit préférable pour la régularité de réalisation technique du circuit. La régularité de réalisation est là encore assurée du fait que les additionneurs $OBFA_z$ sont techniquement identiques aux additionneurs OBFA de chaque cellule de calcul telle que représentée sur la figure 1.

L'additionneur fonctionne, et est connecté, de manière similaire à ce qui a déjà été décrit. Notamment, la connexion de sortie de report Cout A2 du dernier additionneur OBFA2 est rebouclée, via un registre de retard RCA et une porte d'initialisation EA, sur la connexion d'entrée de report CinA0 du premier additionneur OBFA0. Le résultat de l'opération $R = A.B + Y$ est présent sous forme multiplexée sur les connexions de sortie du résultat Sout de chaque additionneur OBFA0, OBFA1, OBFA2 lorsque ces bits $b_j$ et $y_p$ de même poids binaire sont présentés au circuit.

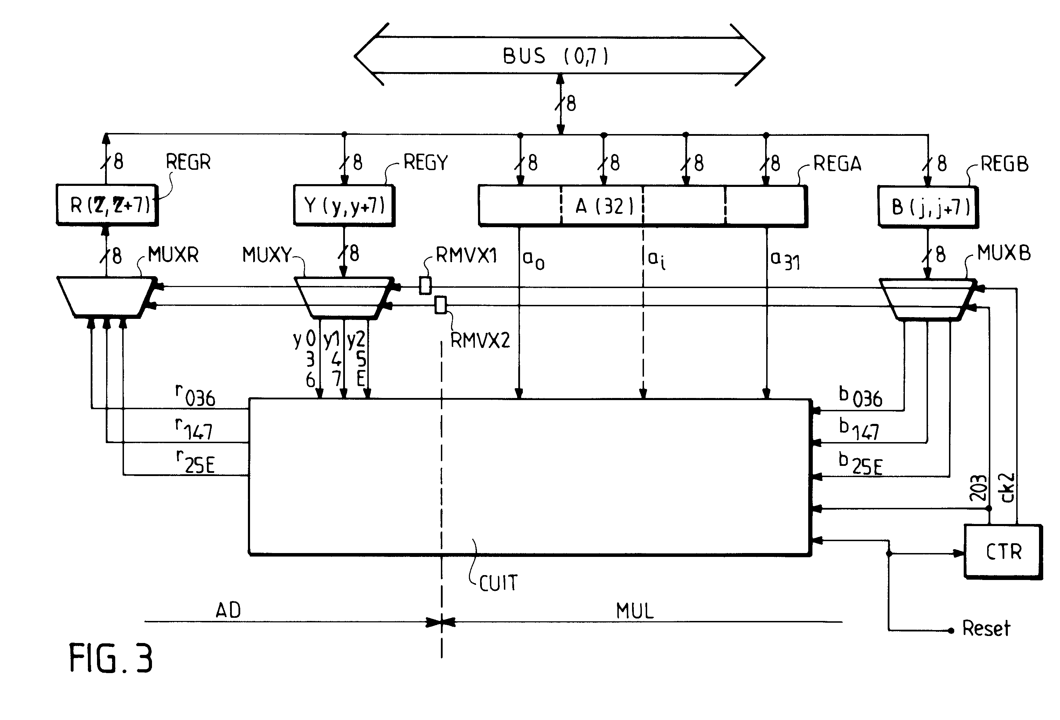

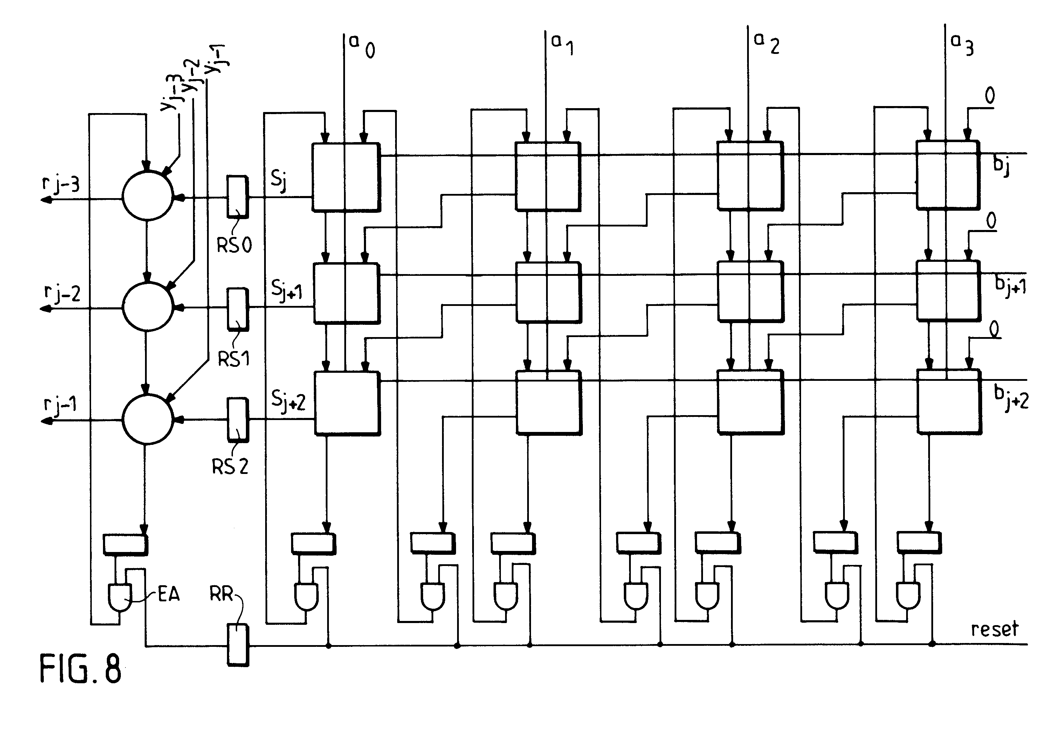

Sur la figure 8 le circuit est encore une vue partielle de la figure 2. Par rapport à la figure 7, seuls des registres de retard RS0, RS1, RS2 ont été ajoutés entre l'opération de multiplication et l'opération d'addition. Il résulte de cet ajout que l'opération de multiplication et l'opération d'addition sont exécutées avec un décalage d'un coup d'horloge dans le temps. Ainsi au moment où les bits 0-(j-3), 1(j-2), 2(j-1) de Y sont présentés à l'additionneur, les bits 3(j), 4(j + 1), 5(j + 2) de B sont présentés à la multiplication. Pour la bonne initialisation du circuit, un registre de retard RR a aussi été ajouté sur la connexion RESET qui attaque la porte EA. L'intérêt technique de cette exécution décalée dans le temps va maintenant apparaître en décrivant le fonctionnement d'une forme préférée de réalisation avec les figures 2 et 3 combinées.

La figure 3 représente un système dans lequel est inséré le circuit (CUIT) représenté à la figure 2. La figure 2 ne comporte, par souci de simplicité, que 4 lignes de bits pour le nombre A mais son extension à un nombre A de 32 bits ne présente aucune difficulté.

Un système d'encryptage de message, par exemple du genre RSA, comporte un système de pilotage, non représenté sur la figure 3, qui soustraite certains calculs à des éléments spécialisés avec lesquels il communique au moyen d'un bus.

Sur la figure 3 un bus de 8 bits (BUS) est représenté ainsi que des moyens intermédiaires entre le bus et le circuit de calcul (CUIT). Rien n'empêche évidemment que ces moyens intermédiaires soient implantés sur la même puce que le circuit de calcul dans la mesure où la technologie le permet. Ces moyens intermédiaires sont essentiellement constitués par quatre registres, deux multiplexeurs, et un démultiplexeur.

Un premier registre de mémoire (REGA) mémorise le nombre A, sur la figure il comporte 32 bits, ce qui n'est pas une limitation, et il est en mesure d'alimenter en permanence les lignes de connexions d'entrée ($a_0$,...,$a_i$,...$a_{31}$) du circuit (CUIT) dès que le nombre A a été transmis par le bus. Pour cette transmission, 4 coups d'horloge sont nécessaires avec un bus de 8 bits.

Un deuxième registre de mémoire (REGB) mémorise le nombre B mais seulement 8 bits par 8 bits lesquels sont délivrés à un premier multiplexeur (MUXB) qui est connecté au circuit (CUIT) par trois connexions unifilaires (b036, b147, b25E) connectées respectivement aux entrées $b_j$, $b_{j+1}$, $b_{j+2}$ déjà décrites de manière générale. Ce multiplexeur est agencé pour, lors d'un premier coup d'horloge délivrer les 3 premiers bits '$b_0$', '$b_1$', '$b_2$' du contenu du registre REGB respectivement aux trois dites connexions unifilaires, lors d'un deuxième coup d'horloge délivrer similairement les 3 bits suivants '$b_3$', '$b_4$', '$b_5$', et lors d'un troisième coup d'horloge délivrer les 2 derniers bits '$b_6$', '$b_7$' aux connexions $b_{036}$, $b_{147}$; lors du troisième coup d'horloge le signal présenté sur la connexion $b_{25E}$ est sans importance comme on le verra plus loin.

Un troisième registre de mémoire (REGY) mémorise le nombre Y mais seulement 8 bits par 8 bits lesquels sont délivrés à un deuxième multiplexeur (MUXY) qui est connecté au circuit (CUIT) par trois connexions unifilaires ($y_{036}$, $y_{147}$, $y_{25E}$) connectées respectivement aux entrées de l'additionneur déjà décrit de manière générale. On aura déjà compris que le fonctionnement de REGY et MUXY est identique au fonctionnement de REGB et MUXB.

Un quatrième registre de mémoire (REGR) mémorise le nombre R mais seulement 8 bits par 8 bits lesquels sont délivrés par un démultiplexeur (MUXR) qui est connecté au circuit (CUIT) par trois connexions unifilaires ($r_{036}$, $r_{147}$, $r_{25E}$) connectées respectivement aux sorties de résultat de l'additionneur. Ici le démultiplexeur (MUXR) agit en sens inverse mais, à nouveau, le fonctionnement est similaire.

Les deux multiplexeurs et le démultiplexeur agissent sous le contrôle de deux commandes générées par un contrôleur CTR. Une première commande (CK2) indique que c'est le deuxième coup d'horloge et donc que ce sont les bits 3, 4 et 5 qui sont traités. Une deuxième commande (203) indique s'il faut traiter '2' ou '3' bits. La combinaison de ces deux commandes indique donc en permanence quel est le coup d'horloge en cours parmi 3, étant entendu qu'il n'y a deux bits à traiter que lors du troisième coup d'horloge. Du fait que l'additionneur opère avec un retard sur la multiplication, les deux lignes de commande comportent chacune un registre de retard (RMUX1, RMUX2) entre le MUXB et le MUXY.

Sur la figure 2, le circuit diffère de celui de la figure 8 par la présence de lignes de connexion figurées en pointillés et connectées à des multiplexeurs (M1, M2, M3, M4, M5, et....) commandés par la susdite commande 203. Les pointillés ne sont là que pour faciliter la compréhension car ce sont effectivement des connexions mais elles ne sont opérationnelles que lorsque la commande 203 indique qu'il n'y a que '2' bits à traiter. Dans ce cas, il est clair que le dernier rang (OBFA2, 20, 21, 22,..., $2_i$,...,231) doit être court-circuité et que toutes les dites lignes de rebouclage doivent maintenant partir de l'avant dernier rang (OBFA1, 10, 11, 12,...$1_i$,...,131). Les lignes en pointillés opèrent ce court-circuit d'une manière simple en combinaison avec les multiplexeurs M et la commande 203.

Le fonctionnement de l'ensemble représenté par les figures 2 et 3 est le suivant :

Pendant 4 coups d'horloge (1, 2, 3, 4), le système de pilotage envoie sur le bus le nombre A qui est mémorisé dans le registre REGA.

A ce moment la commande Reset est positionnée pendant un coup d'horloge (5) et simultanément les 8 premiers bits de B sont envoyés sur le bus et mémorisés dans le registre REGB.

Au coup d'horloge (6) les 8 premiers bits de Y sont envoyés sur le bus et mémorisés dans le registre REGY pendant que les 3 premiers bits du contenu de REGB sont sélectionnés par le MUXB de telle sorte que les registres RS0, RS1, RS2 mémorisent les 3 premiers bits du produit A.B. pendant que les registres de retard des connexions de rebouclage mémorisent les valeurs adéquates en provenance du dernier rang d'addition binaire.

Au coup d'horloge (7) les 3 premiers bits du contenu de REGY sont sélectionnés par le MUXY de telle sorte que les 3 premiers bits du résultat A.B + Y sont mémorisés dans le registre REGR via le MUXR. Simultanément les 3 bits suivants de REGB ($b_3$, $b_4$, $b_5$) sont sélectionnés par le MUXB de telle sorte que les registres RS0, RS1, RS2 mémorisent maintenant les 3 bits suivants du produit A.B.

Au coup d'horloge (8) les bits 3, 4 et 5 de REGY sont sélectionnés par le MUXY de telle sorte que, similairement, le REGR contient maintenant les 6 premiers bits du résultat de A.B + Y. Simultanément, la commande 203 est positionnée par le contrôleur CTR de telle sorte que les bits $b_6$ et $b_7$ sont sélectionnés par le MUXB et que le troisième rang du multiplicateur est court-circuité (le troisième rang de l'additionneur sera court-circuité au coup d'horloge suivant du fait du registre R203 qui opère comme le registre RMUX2). Encore simultanément les 8 bits suivants de B sont envoyés sur le bus et maintenant mémorisés dans REGB.

Au coup d'horloge 9 les 8 bits suivants de Y sont envoyés sur le bus et mémorisés dans le registre REGY dans lequel le MUXY vient de sélectionner les deux derniers des premiers 8 bits de Y de telle sorte que le registre REGR contient maintenant les 8 premiers bits du résultat de A.B + Y.

Au coup d'horloge (10) le contenu du registre R est envoyé sur le bus à destination du système de pilotage pendant que les autres opérations s'effectuent dans le circuit comme susdit.

On voit bien maintenant comment le processus du calcul de A.B + Y est harmonieusement combiné avec le trafic des données B, Y, R sur le bus au sein d'un cycle répétitif qui dure 3 coups d'horloge.

La phase opératoire dure 192 coups d'horloge (192 = 3 x 512/8) lorsque le nombre B et le nombre Y comportent 512 bits. A ce moment seuls les 504 premiers bits de R ont été recueillis du fait du décalage (aucun résultat n'est disponible au coup d'horloge n˚ 7 comme susdit), et il faut encore (40/8 x3) 15 coups d'horloge pour obtenir les 40 derniers bits de R au rythme de 8 bits tous les 3 coups. Au total le système de pilotage doit donc gérer 4 + 192 + 15 = 211 coups d'horloge pour obtenir le résultat A(32).B(512) + Y(512) = R(544) avec le circuit conforme à l'invention et à travers un bus de 8 bits.

Ce résultat est remarquable d'efficacité au vu de la simplicité d'implémentation du circuit lequel est très regulier. En technologie CMOS, 1.6µ, double métal, on peut estimer la surface nécessaire à tous les éléments (registres, multiplicateurs, additionneurs, contrôleurs et multiplexeurs) à 3000x500$\mu^2$ c'est-à-dire 1,5 mm$^2$. Si l'on trouve le circuit un peu long et étroit, il est encore possible de le découper en deux, c'est-à-dire 1.500x1000 $\mu^2$, sans difficulté puisque le parcours des données ne comporte que 3 bits.

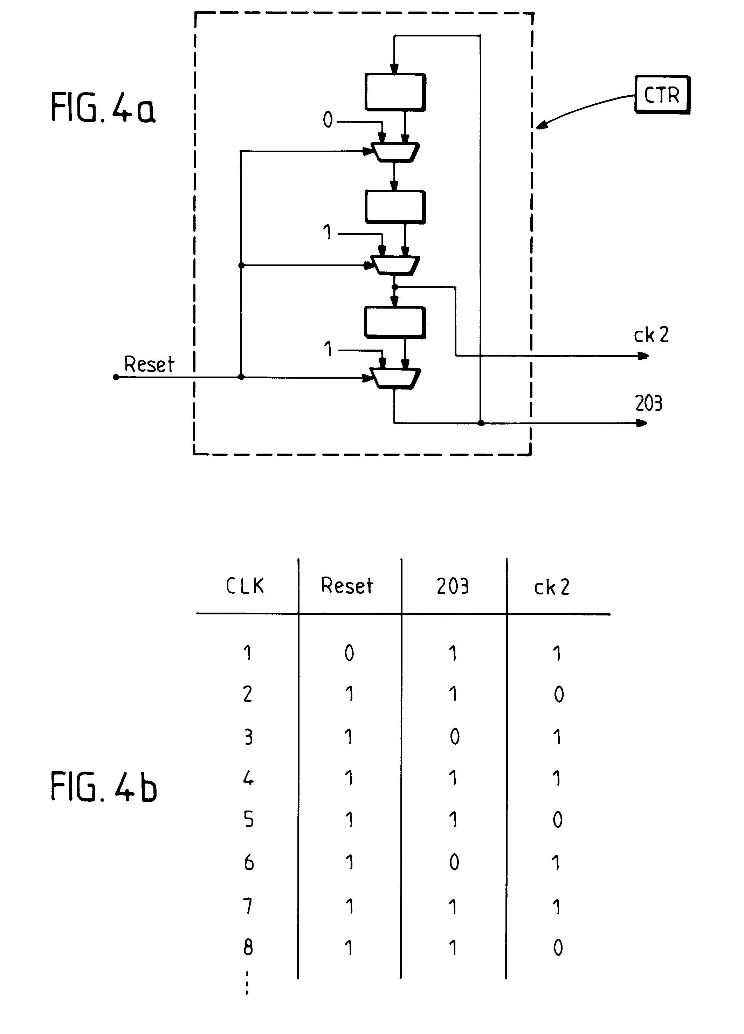

Sur la figure 4, un exemple simple, et non limitatif, de réalisation du contrôleur CTR est représenté. Les valeurs successives que prennent les commandes reset, 203 et CK2 sont indiquées dans le tableau joint.

Le circuit ci-dessus décrit n'est clairement pas limitatif et bien des variantes sont envisageables avec des nombres A, B, Y de dimensions différentes et des largeurs de bus diverses. Par exemple, en considérant encore le calcul de $R = AX + Y$ (A étant une constante et le bus transportant d'une manière itérative X puis Y puis R), si le bus a une largeur différente de 8 bits, il est clair que le nombre N valable à la fois pour la multiplication et l'addition sera choisi différent de 3 pour conserver les avantages de la séquentialisation du traitement.

Avec un bus de 16 bits on pourrait traiter 6 puis 6 puis 4 bits (6 + 6 + 4 = 16), ou bien 6 puis 5 puis 5 bits (6 + 5 + 5 = 16). Ces deux solutions semblent à peu près équivalentes car à vitesses d'exécution égales, le nombre N égal à 6 est le même; dans le premier cas il faudra remplacer l'ordre '2' ou '3' (203) par un ordre '6' ou '4' et dans le second par un ordre '6' ou '5' ce qui n'a pratiquement pas d'influence sur le coût de l'implantation du circuit.

Avec un bus à 32 bits, le meilleur choix semble être 11 puis 11 puis 10 c'est-à-dire N = 11.

Avec un bus à 48 bits, on peut traiter 3 fois 16 bits (N = 16) et dans ce cas l'ordre (203) n'a plus de raison d'être car aucun rang d'addition binaire ne doit être court-circuité.

Bien d'autres variantes peuvent être envisagées sans sortie du cadre de l'invention en adaptant au mieux la séquentialisation du calcul avec la dimension des nombres à calculer et la largeur du (ou des) bus.

**Revendications**

1. Circuit multiplicateur pour multiplier un premier nombre A de 'm' bits '$a_i$' ($0 \leqslant i \leqslant m-1$) par un deuxième nombre B de 'n' bits '$b_j$' ($0 \leqslant j \leqslant n-1$), constitué d'une pluralité de rangs d'addition binaire ( = carry save adder) connectés entre eux, chaque rang d'addition binaire étant constitué de 'm' cellules de calcul, chaque cellule de calcul comportant un additionneur avec report propagé ( = one bit full adder) et une porte ET adéquatement connectés aux quatre connexions d'entrée $a_i$, $b_j$, $S_{in}$, $C_{in}$ et aux deux connexions de sortie Sout, Cout (S pour résultat et C pour report) de la dite cellule de calcul, caractérisé en ce que, les dites connexions de sorties de report $Cout_i$ du dernier des dits rangs d'addition binaire sont rebouclées, chacune au moyen d'une connexion de rebouclage, sur les dites connexions d'entrée de report $Cin_i$ du premier des dits rangs d'addition binaire, en ce que, les dites connexions de sorties de résultat $Sout_i$ du dernier des dits rangs d'addition binaire -à l'exception de la sortie de la cellule de calcul de poids faible (i = 0)- sont rebouclées, chacune au moyen d'une connexion de rebouclage, sur les dites connexions d'entrée de résultat $Sin_{i-1}$ du premier des dits rangs d'addition binaire, chaque dite connexion de rebouclage comportant un registre de retard, en ce que, le nombre N des dits rangs d'addition binaire est notablement inférieur à 'n', et en ce que, il est muni de moyens d'initialisation et de terminaison de telle sorte que, lorsque le nombre A est présent sur les dites connexions d'entrée '$a_i$' alors que le nombre 'B' est présenté sur les dites connexions d'entrée '$b_j$' sous forme multiplexée dans le temps, le résultat de la dite multiplication est obtenu sous forme multiplexée dans le temps sur les N connexions de sortie de résultat Sout des seules cellules de calcul de poids faible (i = 0) de chacun des N rangs.

2. Circuit multiplicateur selon la revendication 1, caractérisé en ce que, les dits moyens d'initialisation sont constitués d'une part de premiers moyens pour positionner à '0' les connexions d'entrée de résultat Sin des cellules de calcul de poids fort (i = m-1) de chaque rang d'addition binaire, d'autre part, de deuxièmes moyens pour positionner à '0' toutes les dites connexions de rebouclage quelle que soit la valeur enregistrée dans le registre de retard, les dits deuxièmes moyens étant activés uniquement lors de l'initialisation du calcul.

3. Circuit multiplicateur selon la revendication 1 ou 2, caractérisé en ce que, il comporte en outre un additionneur ( = ripple carry adder) constitué d'une colonne de 'z' additionneurs avec report propagé ( = one bit full adder) connecté pour additionner bit à bit un troisième nombre Y de 'p' bits '$Y_k$' ($0 \leqslant k \leqslant p-1$) avec le dit résultat de la dite multiplication, le dit nombre Y étant présenté sous forme multiplexée dans le temps, et la connexion de sortie de report Cout du 'z'ième additionneur de la colonne étant rebouclée sur la connexion d'entrée de report du premier additionneur de la colonne laquelle connexion est similaire aux précédentes dites connexions de rebouclage.

4. Circuit multiplicateur selon la revendication 3 caractérisé en ce que, le nombre 'z' est égal au nombre 'N' et en ce que le nombre 'p' est égal au nombre 'n'.

5. Circuit multiplicateur selon la revendication 4 caractérisé en ce que, le résultat R de l'addition étant constitué de 'm + n' bits '$r_1$' ($0 \leqslant 1 \leqslant m + n-1$), les dits moyens de terminaison sont constitués de moyens pour positionner à '0' d'une part les entrées '$b_j$' d'autre part les

entrées 'y$_k$' après que tous les bits 'b$_j$', 'y$_k$' des nombres B et Y aient été présentés.

6. Circuit multiplicateur selon la revendication 5, caractérisé en ce que, chacune des N connexions de sortie de résultat Sout du multiplicateur vers l'additionneur est munie d'un registre de retard de telle sorte que, la présentation des bits 'Y$_k$' étant également retardée, l'exécution de l'addition s'effectue en retard sur l'exécution de la multiplication.

7. Circuit multiplicateur selon l'une des revendications 1, 2, 4, 5 ou 6, caractérisé en ce que, le nombre 'N' est choisi pour être un sous-multiple exact du nombre 'n'.

8. Circuit multiplicateur selon l'une quelconque des revendications 1, 2, 4, 5 ou 6, le nombre 'N' n'étant pas un sous-multiple exact du nombre 'n', caractérisé en ce que, il est muni de moyens pour, sélectivement, court-circuiter les circuits de calcul auxquels aucun bit de donnée d'entrée des nombres B et/ou Y n'est présenté.

9. Circuit multiplicateur selon la revendication 8 prise en combinaison avec la seule revendication 6, caractérisé en ce que, il comporte 3 rangs d'addition binaire (N = 3), il comporte en outre un premier registre de mémoire pour mémoriser le nombre A, lequel est une constante, un deuxième registre de mémoire de 8 bits pour mémoriser, par tranches successives de 8 bits, le nombre B, un troisième registre de mémoire de 8 bits pour mémoriser, par tranches successives de 8 bits, le nombre Y, un quatrième registre de mémoire de 8 bits pour mémoriser, par tranches successives de 8 bits, le résultat R, et des moyens de multiplexage pour présenter, et des moyens de démultiplexage pour recueillir, respectivement et successivement 3 bits, puis encore 3 bits, et enfin 2 bits (3 + 3 + 2 = 8) transitant entre les dits 2ième, 3ième et 4ième registre et les connexions correspondantes du dit circuit.

10. Circuit multiplicateur selon la revendication 9, pour calculer R = A.B + Y caractérisé en ce que, A comporte 32 bits (m = 32), B et Y comportent 512 bits (p = n = 512), R comporte 544 bits (p + m = 544) le dit circuit étant connecté à un bus de données de 8 bits pour transporter les données A, B, Y et R, le processus complet de calcul comporte :
    - une phase initiale qui dure 4 coups d'horloge pour enregistrer le nombre A (8x4 = 32)

    - une phase opératoire qui dure 192 coups d'horloge soit 3 fois 512 divisé par 8 pour présenter B et Y et recueillir les 504 premiers bits de R,
    - une phase terminale qui dure 15 coups d'horloge pour recueillir les 40 derniers bits de R c'est-à-dire un total de (4 + 192 + 15) = 211 coups d'horloge pour le calcul complet.

11. Système de calcul caractérisé en ce que, il est agencé pour mettre en oeuvre un circuit multiplicateur selon l'une quelconque des revendications précédentes.

FIG.1

FIG. 2

EP 0 464 899 A1

FIG. 3

FIG.4a

CTR

Reset

ck2

203

FIG. 4b

| CLK | Reset | 203 | ck2 |
|---|---|---|---|
| 1 | 0 | 1 | 1 |
| 2 | 1 | 1 | 0 |
| 3 | 1 | 0 | 1 |
| 4 | 1 | 1 | 1 |
| 5 | 1 | 1 | 0 |
| 6 | 1 | 0 | 1 |
| 7 | 1 | 1 | 1 |
| 8 | 1 | 1 | 0 |
| ⋮ | | | |

FIG.5

FIG. 6

EP 0 464 899 A1

FIG. 7

FIG. 8

EP 0 464 899 A1

**Office européen
des brevets**

**RAPPORT DE RECHERCHE
EUROPEENNE**

Numéro de la demande

**EP 91 20 1561**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE JOURNAL OF SOLID-STATE CIRCUITS. vol. SC-22, no. 1, Février 1987, NEW YORK US pages 35 - 40; LEE ET AL: 'A high-speed high-density silicon 8x8-bit parallel multiplier ' * page 35, colonne 2, alinéa 2; figures 1,2 * – – – | 1 | G 06 F 7/44 G 06 F 7/52 G 06 F 7/544 |
| A | IBM TECHNICAL DISCLOSURE BULLETIN. vol. 13, no. 2, Juillet 1970, NEW YORK US pages 546 - 548; D.M. SAUNDERS ET AL: 'High-speed multiplier ' * le document en entier * – – – | 1 | |
| A | EP-A-0 086 904 (DEUTSCHE ITT) * abrégé * * page 6, ligne 26 - page 7, ligne 4; figure 2 * – – – – – | 3 | |

DOMAINES TECHNIQUES
RECHERCHES (Int. Cl.5)

G 06 F

Le présent rapport de recherche a été établi pour toutes les revendications

| Lieu de la recherche | Date d'achèvement de la recherche | Examinateur |
|---|---|---|
| La Haye | 10 septembre 91 | COHEN B. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
--------------------------------------------------------------------------------
& : membre de la même famille, document correspondant